# EUROPEAN PATENT SPECIFICATION

(11) **EP 2 881 423 B1**
(45) Date of publication and mention of the grant of the patent: **18.05.2022**
(21) Application number: 14830932.1
(22) Date of filing: 01.08.2014
(51) Int. Cl.: C08J 5/18, G09F 9/00, C01B 33/12, C09D 127/18, C09D 183/04

(54) **FILM HAVING WATER REPELLENCY AND OIL REPELLENCY AND ELECTRIC/ELECTRONIC DEVICE**
WASSER- UND ÖLABWEISENDER BESCHICHTUNGSFILM SOWIE ELEKTRISCHE/ELEKTRONISCHE VORRICHTUNG
FILM HYDROFUGE ET OLÉOFUGE ET DISPOSITIF ÉLECTRIQUE/ÉLECTRONIQUE

(30) Priority: 02.08.2013 KR 20130092082; 02.08.2013 KR 20130092080
(43) Date of publication of application: 10.06.2015
(73) Proprietor: LG Chem, Ltd., Seoul 07336 (KR)
(72) Inventor: KIM, Su Jin, Daejeon 305-738 (KR); LEE, Eun Jeong, Daejeon 305-738 (KR); JEONG, Hoon, Daejeon 305-738 (KR); KIM, Ki-Hwan, Daejeon 305-738 (KR); KIM, Tae Su, Daejeon 305-738 (KR); PARK, Jeong Ho, Daejeon 305-738 (KR)
(74) Representative: Goddar, Heinz J.
(86) International application number: PCT/KR2014/007140
(87) International publication number: WO 2015/016681

(56) References cited:
- JP-A- 2007 077 201
- JP-A- 2012 219 249
- KR-A- 20100 003 419
- KR-A- 20110 053 333
- US-A1- 2008 198 457
- US-A1- 2012 293 586
- US-A1- 2012 293 586
- DATABASE WPI Week 200960 Thomson Scientific, London, GB; AN 2009-N22418 XP002755285, -& WO 2009/107191 A1 (OGAWA K) 3 September 2009 (2009-09-03)
- None

## Description

### FIELD OF THE INVENTION

The present invention relates to a water repellent and oil repellent film, and an electrical and electronic apparatus including the film.

### BACKGROUND OF THE INVENTION

As the performance of electronic products is degraded or malfunction is caused due to the transcription of contaminants, and higher appearance quality is required, surface-treated electronic products to have an anti-contamination property has recently appeared.

In order to afford an anti-contamination property to electronic products such as a display device, a method of forming a specific pattern on the outer surface of a product to decrease the transcribed amount of contaminants, or a method of broadly spreading contaminants through a lipophilic coating, and the like are known.

Specifically, in the method of securing an anti-contamination property by forming a specific pattern on the outer surface of a product, particles or patterns of a microsize are formed on the outside of a product, thereby forming surface texturing which haze, and thus, even if the product is stained with contaminants, they are not easily seen.

For example, Korean Patent Application No. 2007-0084369 discloses a superhydrophobic substrate having protruded structures connected in a network, Korean Laid-Open Patent Publication No. 2010-0105241 discloses an antifingerprint pattern having a specific height and width, and Korean Patent Application No. 2011-7003244 discloses a pattern consisting of projections of the shape of a truncated pyramid, a circular truncated cone, a compound parabola, a compound oval, a polyobject, or a three-dimensional rotatory body of a conic section.

However, according to the previously known method of forming specific patterns or projections, haze becomes 10 % or more, thus lowering screen contrast in a display device and the like, or when contaminants are excessively transcribed, the contaminants may penetrate into the texturing of the surface and become difficult to remove.

Meanwhile, the lipophilic coating affords visibility by spreading sebum, which is a main factor causing an inferior exterior property, thinly and broadly. However, while the lipophilic coating has high transmittance and low haze, it conceals a stained fingerprint rather than decreasing the stained amount of the fingerprint, and thus it cannot reduce the transcribed amount of the fingerprint itself, and if the fingerprint is excessively transcribed and stacked, it is not easy to completely remove it.

A method of securing anti-contamination by lowering surface energy of the exterior of a product using a coating material including a fluorine-based compound is also known. However, according to the coating of a material including a fluorine-based compound, although contact angles to water and oil may become large thus increasing water repellency and oil repellency, it is not sufficient to secure such properties to prevent transcription of a fingerprint, for example, outstanding water repellency and oil repellency. Further, it is also difficult to sufficiently reduce a transcribed amount of contaminants by this method, and it is not easy to remove transcribed contaminants.

That is, previously known anti-contamination products could not simultaneously have water repellency and oil repellency, and could not easily remove transcribed contaminants.

### PRIOR ART

### PATENT DOCUMENT

(Patent Document 0001) Korean Patent Application No. 2007-0084369
(Patent Document 0002) Korean Laid-Open Patent Publication No. 2010-0105241
(Patent Document 0003) Korean Patent Application No. 2011-7003244

US 2008/198457 A1 discloses a dust-proof, reflecting mirror comprising a reflecting mirror substrate, a dust-proof coating having fine surface roughness, which is formed on a reflecting surface of the reflecting mirror substrate, and an outermost water-repellent or water/oil-repellent coating.

US 2012/293586 A1 discloses a device having a multi-scale superoleophobic surface and methods for forming and using the device, wherein a particulate composite layer including metal-containing particulates is formed on a textured micron-/sub-micron surface of a semiconductor layer to provide device with multi-scale rough surface.

WO 2009/107191 A1 discloses a water repellent, oil repellent antifouling glass plat; a process for producing the same; and a vehicle and building utilizing the glass plate. There is disclosed a water repellent, oil repellent antifouling glass plate (10) produced by forming a water repellent, oil repellent antifouling film (8) on a surface of microparticle-fusion-bonded glass substrate (7) obtained by coating a surface of glass substrate (5) with a microparticle dispersion having transparent microparticles (4) dispersed therein, followed by drying and heat treatment in an oxygenous atmosphere. Further, there are disclosed a vehicle and building utilizing the glass plate.

### DETAILED DESCRIPTION OF THE INVENTION

### TECHNICAL OBJECTIVES

It is an object of the present invention to provide a film that may minimize the amount of transcribed contaminants and may easily remove transcribed contaminants, and simultaneously has water repellency and oil repellency.

It is another object of the present invention to provide an electrical and electronic apparatus including the film.

It is still another object of the present invention to provide an electrical and electronic apparatus including an outer surface that may minimize the amount of transcribed contaminants and may easily remove transcribed contaminants, and simultaneously has water repellency and oil repellency.

### TECHNICAL SOLUTIONS

The above problems are solved in accordance with the independent claims. Further embodiments result from the subclaims.

The present invention provides water repellent and oil repellent film comprising at least two microprojections having a shape comprised of a column part and a plate-shaped part located on the upper side of the column part which is the outermost side of the protruded direction of the column part,
wherein the plate-shaped part has a larger area than the upper side of the column part,
wherein the ratio of a height of one of the microprojections to a distance between the plate-shaped parts of two neighboring microprojections is 0.2 to 0.4.

The present invention also provides an electrical and electronic apparatus including the film.

Further described herein is an electrical and electronic apparatus including an outer surface on which at least two microprojections having a shape comprised of a column part and a plate-shaped part located on the upper side of the column part which is the outermost side of the protruded direction of the column part,
wherein the plate-shaped part has a larger area than the upper side of the column part,
wherein the ratio of a height of one of the microprojections to a distance between the plate-shaped parts of two neighboring microprojections is 0.2 to 0.4..

Hereinafter, a water repellent oil repellent film and an electrical and electronic apparatus according to specific embodiments will be explained in detail.

As used herein, the term 'film' refers to an object with the shape of a thin membrane, the material is not specifically limited, and for example, it may include an organic substance such as a polymer and the like or an inorganic substance such as a metal, silicon, and the like.

The inventors confirmed through experiments that if a film including microprojections has the above specific structure and ratio relating to the size, it has a high contact angle to organic components as well as to water, thus realizing outstanding water repellency and oil repellency, and the transcribed amount of contaminants may be minimized and yet transcribed contaminants may be easily removed, and completed the invention.

In case an organic component or liquid is transcribed on the film, an air pocket may be formed in a predetermined space defined by the microprojection and the base side of the film, thus affording high repellency and a high contact angle to organic components or liquid to the film of one embodiment.

The ratio (H/S) may be a ratio of the height of one of two microprojections to the distance between the plate-shaped parts of two neighboring microprojections.

The distance between the plate-shaped parts of two neighboring microprojections may be the shortest distance between the plate-shaped parts of the neighboring microprojections.

As the distance between the upper parts of neighboring microprojections and the height of one microprojection have a ratio of the above-explained range, a contact angle to organic components transcribed on the surface or a moisture component may be further increased, the contact area of these components may be reduced, and an air pocket may be more easily formed and maintained in a space defined by the microprojection and the base side of the film. Further, lower interaction energy with organic components or water may be afforded to the water repellent and oil repellent film, thus minimizing the amount of transcribed organic components or moisture, and easily removing a transcribed organic substance.

If the ratio of the height of the microprojection to the distance between the upper parts of neighboring microprojections is too small, for example, the height of the microprojection is too small or the distance between the plate-shaped parts of the microprojections is too large, an air pocket formed in a space defined by the microprojection and the base side of the film may easily collapse.

Further, if the ratio of the height of the microprojection to the distance between the upper parts of neighboring microprojections is too large, for example, if the height of the microprojection is too large, mechanical hardness or physical properties of the film or microprojection itself may be degraded, and if the distance between the plate-shaped parts of the microprojections is too small, the outer surface of the film may have structural characteristic or surface characteristic that does not substantially differ from a plane without microprojections, and thus the above-explained water repellency and oil repellency may not be simultaneously secured.

Although a film that has a specific pattern or projection formed outside and thus has water repellency above a certain level has been previously known, in the previously known film, a phenomenon appeared that an air pocket collapses over time, or by the external pressure or gravity acting on a liquid, or capillarity, and organic component or moisture transcribed on the surface penetrates inside.

However, due to the shape characteristic of the microprojection included in the film of one embodiment and the surface property resulting from the ratio of the height of the microprojection to the distance between the upper parts of neighboring microprojections, the collapse of an air pocket over time or by external pressure, gravity acting on liquid, capillarity, and the like, may be prevented, and the penetration of organic components or moisture may be prevented.

Meanwhile, the microprojection means a structure that is formed so as to protrude outside of the film of one embodiment, and has a height or width of a nanometer or micrometer unit.

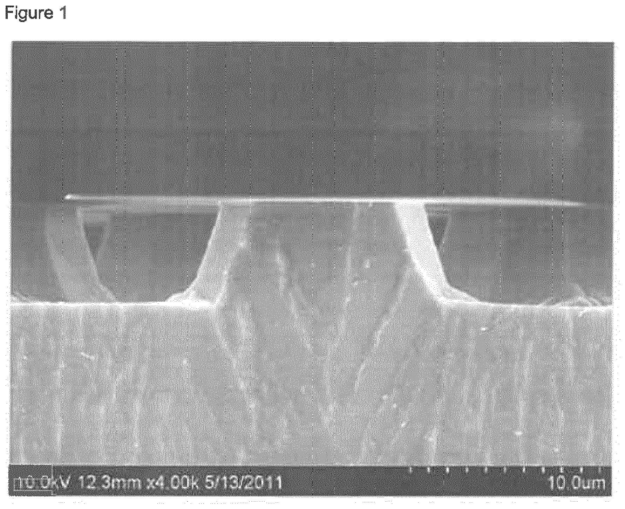

The microprojection may have a shape including a column part and a plate-shaped part located on the upper side of the column part in accordance with the invention, and one example of the microprojection is as shown in Fig. 1.

The column part of the microprojection may have a shape of a cylinder, a circular truncated cone, a polyprism, a truncated polypyramid, a reversed circular truncated cone, or a reversed truncated polypyramid.

Due to the existence of the plate-shaped part located on the upper side of the column part having a predetermined three-dimensional shape, a contact angle to an organic component transcribed on the surface or moisture component may be significantly increased, and the area at which the organic component or moisture component contacts the film may be minimized.

Further, since the plate-shaped part of the microprojection may have a shape that covers an air pocket formed on the internal structure of the film, it may prevent the air pocket from collapsing, and may partially support the organic component transcribed on the surface of the film or moisture component, thus preventing them from penetrating inside the film.

In order to further increase a contact angle to an organic component transcribed on the surface or a moisture component, and more easily form and maintain the air pocket, the column part of the microprojection may have a shape of a cylinder, a circular truncated cone, a polyprism, a truncated polypyramid, a reversed circular truncated cone, or a reversed truncated polypyramid.

The plate-shaped part may have a larger area than the upper side of the column part, that is, the outermost side of the protruded direction of the column part. Namely, the plate-shaped part may contact the total area of the upper outermost side of the protruded direction of the column part, and yet have a larger area than the upper outermost part of the column part.

Although the area of the plate-shaped part is not specifically limited, it may be 1.2 to 10 times the cross-sectional area of the outermost side of the protruded direction of the column part (cross-section toward a direction horizontal to the substrate). If the area of the plate-shaped part is too small, the effect resulting from the inclusion of the plate-shaped part may be insignificant. Further, if the area of the plate-shaped part is too large, mechanical strength of the outside of the film may be lowered, and the structure of the microprojection may easily collapse.

Although the shape of the plate-shaped part is not specifically limited, for example, the cross-section of the plate-shaped part toward a direction of the base side of the film may be a circle, an oval, or a polygon having 3 to 20 internal angles. The cross-section of the plate-shaped part toward a direction of the base side of the film means the cross-section of the plate-shaped part in a direction parallel to the base side of the film.

The cross-section of the plate-shaped part in a direction perpendicular to the substrate may be a rectangle, a trapezoid, or a reversed trapezoid.

The largest diameter of the plate-shaped part of the microprojection may be 0.1 *µ*m to 100 *µ*m, or 0.2 *µ*m to 50 *µ*m. If the largest diameter of the plate-shaped part is too large, the area ratio occupied by the plate-shaped part on the surface of the film may become too large, or the contact at which organic component or moisture component contacts the film may be too broad, and thus the film may have substantially the same surface structure or properties as a common flat film. Further, if the largest diameter of the plate-shaped part is too small, the microprojection may have the same shape as one without a plate-shaped part, or when the organic component or moisture component contacts the film, the three-dimensional structural property resulting from the plate-shaped part may be difficult to obtain.

The thickness of the plate-shaped part of the microprojection may be 0.05 *µ*m to 10 *µ*m, or 0.2 *µ*m to 2 *µ*m. If the thickness of the plate-shaped part is too thin, mechanical properties of the outside of the film may be degraded, and if the plate-shaped part is too thick, an air pocket may not be easily formed in a space defined by the substrate and the microprojection.

The height of the column part of the microprojection may be 0.02 *µ*m to 40 *µ*m, or 0.05 *µ*m to 10 *µ*m. The height of the column part of the microprojection may be defined as a distance from the base side of the film to the plate-shaped part.

If the height of the microprojection is too small, it may be difficult for a space defined by the microprojection and the base side of the film to have an appropriate volume or shape for the formation of an air pocket, or a formed air pocket may easily collapse. Further, if the height of the microprojection is too large, mechanical hardness or physical properties of the film or microprojection itself may be degraded.

The first width of the cross-section in the protruded direction of the microprojection may be 0.1 *µ*m to 200 *µ*m, or 0.2 *µ*m to 50 *µ*m. If the first width of the cross-section of the microprojection is too small, mechanical properties of the surface of the film may be degraded. Further, if the width of the cross-section of the microprojection is too large, a contact angle to the organic component transcribed on the surface or moisture component may be decreased, or repellency thereto may be lowered. Further, if the first width of the cross-section of the microprojection is too small or large, the area at which organic component or moisture component contacts the surface of the film may become too broad, and thus the film may have substantially the same surface structure or properties as a common flat film.

The microprojection may include various materials according to the preparation method, and each part of the microprojection may consist of the same or different materials.

Specifically, the microprojection may include at least one selected from the group consisting of glass, silicon, silicon doped with a metal, polysilicon, a silicon-based polymer, a metal urethane resin, a polyimide resin, polyester resin, a (meth)acrylate-based polymer resin, a polyolefin resin such as polyethylene, polypropylene, and the like, and a photosensitive polymer resin.

For example, a plate-shaped part of the microprojection may be formed by forming a pattern of the plate-shaped part on a substrate including components that can be used as the material of the microprojection using an etching mask, and etching, and thereafter, remaining material may be etched to form a column part of the micropattern.

Further, the micropattern may be formed by stacking a component making up a column part of the microprojection on a predetermined substrate, stacking a component making up a plate-shaped part thereon, forming a pattern of the shape of the plate-shaped part using an etching mask, and sequentially etching the material making up the plate-shaped part and the material making up the column part.

Further, the microprojection may be formed by coating a photosensitive resin composition on a predetermined substrate (for example, a silicon substrate, an organic substrate, a polymer substrate, and the like), exposing it to light, and alkali-developing it to form a specific pattern. For example, a microprojection in the shape of a reverse circular truncated cone having inclination on the side may be formed by coating a photosensitive resin composition on a predetermined substrate, and then using a photomask of a specific pattern, exposing it to light at the protruded direction of the microprojection or the rear direction thereof, and developing it.

Meanwhile, the film of one embodiment may further include a fluorine-based compound layer with a thickness of 5 nm to 5 *µ*m that is stacked on the outside of the microprojection.

In case a fluorine-based polymer layer is additionally formed on the outside of the film, the film may have a higher contact angle to oleic acid or distilled water, and thus outstanding water repellency and oil repellency may be simultaneously achieved.

The fluorine-based compound layer may include a fluorine-based unimolecular compound, a fluorine-based polymer compound, or a mixture thereof.

The fluorine-based unimolecular compound may be a siloxane-based molecule including fluorine-substituted aliphatic, cycloaliphatic or aromatic functional groups, or a perfluoropolyether-based compound, and the compound or molecule may include a functional group such as epoxy silane, methoxy silane, chlorosilane, and the like, which can be bonded to the microprojection or the surface of the film according to one embodiment, at the end.

The fluorine-based polymer compound may include a polymer or copolymer synthesized using reactive monomers including a fluorine-containing functional group.

Specifically, the fluorine-based polymer compound may include a (meth)acrylate-based polymer compound substituted by a fluorine-based functional group. The (meth)acrylate-based polymer compound substituted by a fluorine-based functional group may be obtained by polymerizing or copolymerizing a C1-12 perfluoroalkyl (meth)acrylate, pentafluorophenyl (meth)acrylate, or pentafluorobenzyl (meth)acrylate, or a mixture thereof.

The fluorine-based compound layer may be formed on the outer surface of the microprojection through various coating methods or deposition methods, or it may be stacked on the base side of the film as well as on the microprojection.

For the formation or stacking of the fluorine-based compound layer, various coating methods or deposition methods may be used, and in order to form a fluorine-based compound layer having more uniform and appropriate thickness, thermal deposition, hot wire chemical vapor deposition (HW-CVD), or radical polymerization may be used.

If the hot wire chemical vapor deposition (HW-CVD) method is used, a fluorine-based compound layer having uniform thickness over the whole area of microprojections including a column part and a plate-shaped part may be formed, and particularly, a fluorine-based compound layer having uniform thickness may also be formed on the lower side of the plate-shaped part of the microprojection or on the part where the column part and the plate-shaped part contact each other.

Thus, the fluorine-based compound layer may be formed by stacking the fluorine-based polymer resin or a precursor thereof on the outside of the microprojections using the hot wire chemical vapor deposition method.

The shape and size of the microprojection and the distance between the microprojections and the like may be defined to also include the fluorine-based compound layer formed on the outer surface of the microprojection.

Meanwhile, the film may have a contact angle of 130° or more, or 130° to 150°, to 3 ul of oleic acid.

Further, the film may have a contact angle of 130° or more, or 130°to 150°, to 3 ul of distilled water.

The film may have an extremely high contact angle and high repellency to an organic component or a moisture component, and the area at which the organic component or moisture component contacts the film is also extremely small. The water repellent and oil repellent film of one embodiment may realize a Cassie-Baxter state both for the organic component and the moisture component.

According to still another embodiment of the invention, an electrical and electronic apparatus including the water repellent and oil repellent film of one embodiment is provided.

As explained above, the film includes at least two microprojections
having a shape comprised of a column part and a plate-shaped part located on the upper side of the column part which is the outermost side of the protruded direction of the column part,
wherein the plate-shaped part has a larger area than the upper side of the column part, and the ratio (H/S) of the height (H) of one of the microprojections to the distance (S) between the plate-shaped parts of two neighboring microprojections may be 0.2 to 0.4.

A fluorine-based compound layer may be stacked on the surface of the microprojection.

The details of the microprojection formed on the film are as explained above.

The film may have a contact angle of 130° or more, or 130° to 150°, to 3 ul of oleic acid.

Further, the film may have a contact angle of 130° or more, or 130° to 150°, to 3 ul of distilled water.

The film may have an extremely high contact angle and high repellency to an organic component or a moisture component, and the area at which the organic component or moisture component contacts the film is also extremely small. The film may realize a Cassie-Baxter state both for the organic component and the moisture component.

The electrical and electronic apparatus includes various electrical devices, display devices, semiconductor devices, home appliances, and the like.

Examples of the electrical and electronic apparatus may include display devices such as a TV, a computer monitor, a liquid crystal device for a cellular phone, various display devices such LCD, LED, or OLED devices and the like; electrical devices such as an integrated circuit device consisting of diodes and transistors and the like, a thermal electron emission device, a charge coupled device of an electronic camera, a solar cell, or a light emitting device, and the like; and home appliances such as a refrigerator, an air conditioner, a washing machine, a dishwasher, a rice cooker, an oven, and the like.

The water repellent and oil repellent film may be formed or bonded on at least one side of the inside or outside of the electrical and electronic apparatus. Particularly, the water repellent and oil repellent film may be formed on the surface of the screen of the display device.

Meanwhile, the above-explained outstanding water repellency and oil repellency may be realized by forming the film including the above-explained microprojections on the surface on an electrical and electronic apparatus, and the actions and effects in the above-explained embodiments may be realized by forming the structural properties of the surface of the film of the above embodiments on one side of an electrical and electronic apparatus.

Thereby, according to still another embodiment of the invention, an electrical and electronic apparatus including an outer surface on which at least two microprojections having a microhood shape including a column part and a plate-shaped part located on the upper side of the column part are formed, wherein the ratio (H/S) of the height (H) of one of the microprojections to the distance (S) between the plate-shaped parts of two neighboring microprojections is 0.2 to 0.4, is provided.

On the outer surface of the electrical and electronic apparatus of the above embodiment, microprojections of a specific shape are formed with the above-explained structural properties, and thus an extremely high contact angle and high repellency to an organic component or a moisture component may be exhibited, and the area at which the organic component or moisture component contact the outer surface is also extremely small.

Further, the outer surface of the electrical and electronic apparatus of the above embodiment may realize a Cassie-Baxter state both for organic component and the moisture component.

The structural characteristics of the outer surface of the electrical and electronic apparatus include those explained above in regard to the film of the above-explained embodiments.

A fluorine-based compound layer may be additionally formed on the outer surface of the electrical and electronic apparatus.

### ADVANTAGEOUS EFFECT OF THE INVENTION

According to the present invention, a film that may minimize the amount of contaminants transcribed on the product surface, may easily remove transcribed contaminants, and simultaneously has high water repellency and oil repellency, and an electrical and electronic apparatus including the film, are provided.

Further, according to the present invention, an electrical and electronic apparatus including an outer surface that may minimize the amount of contaminants transcribed on the product surface and may easily remove transcribed contaminants, and yet simultaneously has high water repellency and oil repellency, is provided.

### BRIEF DESCRIPTION OF FIGURES

Fig. 1 shows the cross-sectional SEM photograph of the microprojection of the film of Example 1.
Fig. 2 shows the planar SEM photograph of the film of Example 1.
Fig. 3 shows the cross-sectional SEM photograph of the microprojection of the film prepared in Example 3.
Fig. 4 shows the planar SEM photograph of the microprojection of the film prepared in Example 3.
Fig. 5 shows the cross-sectional SEM photograph of the fluorine-based polymer layer formed on the surface of the microprojection of the film prepared in Example 3.
Fig. 6 shows the cross-sectional SEM photograph of the fluorine-based polymer layer formed on the surface of the microprojection of the film prepared in Example 3.

### DETAILED DESCRIPTION OF THE EMBODIMENTS

The present invention will be explained in detail with reference to the following examples. However, these examples are only to illustrate the invention, and the scope of the invention is not limited thereto.

### <Examples 1 to 2 and Comparative Example 1: Preparation of film>

### Example 1

### (1) Formation of microprojection

On a silicon wafer, a SiO₂ layer was formed by PE-CVD (Plasmaenhanced chemical vapor deposition) to a thickness of 500 nm. A negative photoresist was coated on the SiO₂ layer, and using a photomask, UV was irradiated so as to form a pattern of a plate-shaped part of a diameter of 22 *µ*m. Further, using a photoresist stripper, parts other than the pattern of a plate-shaped part (functioning as an etching mask) were removed.

Thereafter, the SiO₂ layer was etched using BOE (buffered oxided etchant) to form a plate-shaped part of microprojection [thickness: 0.3 *µ*m] that is also realized by the pattern of a plate-shaped part, and silicon was etched using a potassium hydroxide solution (etching the silicon wafer) to form a column part of a 3 *µ*m height pattern.

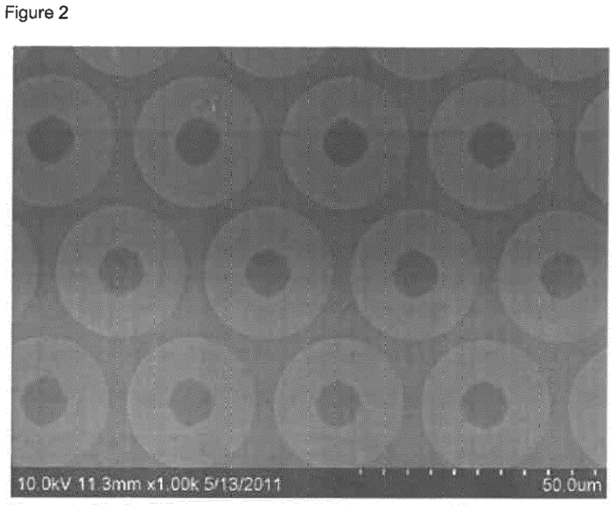

The cross-sectional view and planar view of the film including microprojections including a plate-shaped part and a column part are respectively shown in Fig. 1 and Fig. 2.

### (2) Formation of fluorine-based compound layer

On the surface of the film including microprojections including a plate-shaped part and a column part, fluoroctatrichlorosilane (FOTS) was stacked by vapor deposition, and heat-treated in an oven at 100 °C for 30 minutes. After the heat treatment, non-deposited remaining FOTS was removed using n-hexene to obtain a film, on the surface of which a fluorine-based compound layer was stacked.

In the film obtained in Example 1, the ratio (H/S) of the height (H) of one of the microprojections to the distance (S) between the plate-shaped parts of two neighboring microprojections was about 0.375.

### Example 2

### (1) Formation of microprojections

A film including microprojections including a plate-shaped part with a diameter of 22 *µ*m and a column part with a height of 3 *µ*m was prepared by the same method as in Example 1.

### (2) Formation of a fluorine-based compound layer

Optool DSX was diluted to the content of 0.8 wt% in a fluoroalcohol (3M, FC3283) solution at room temperature to prepare a coating solution. Further, the film on which the above-prepared microprojections including a plate-shaped part and a column part are formed was immersed in the coating solution for surface treatment.

The surface-treated film was treated in a thermo-hygrostat at 60 °C and 90 RH% for 60 minutes to obtain a film, on the surface of which a fluorine-based compound layer was stacked.

In the film obtained in Example 2, the ratio (H/S) of the height (H) of one of the microprojections to the distance (S) between the plate-shaped parts of two neighboring microprojections was about 0.375.

### Comparative Example 1

By the same method as Example 1, microprojections including a plate-shaped part with a diameter of 22 *µ*m and a column part with a height of 0.9 *µ*m was formed, and a fluorine-based compound layer was stacked on the microprojections. However, in the obtained film, the ratio (H/S) of the height (H) of one of the microprojections to the distance (S) between the plate-shaped parts of two neighboring microprojections was 0.09.

### <Experimental Example 1: Measurement of physical properties of film>

### 1. Measurement of static contact angle

By a tangent method, 3 *µ*ℓ each of water and oleic acid were put on the films obtained in the examples, and static contact angles were measured using a DSA 100 measuring apparatus.

The measurement results are shown in the following Table 1.

**[Table 1] Measurement results of static contact angle**

| | 3 ul of oleic acid | | 3 ul of distilled water | |
|---|---|---|---|---|
| | Before the formation of fluorine-based compound layer | After the formation of fluorine-based compound layer | Before the formation of fluorine-based compound layer | After the formation of fluorine-based compound layer |
| Example 1 | 15 | 144 | 31 | 142 |
| Example 2 | 15 | 144 | 31 | 147 |
| Comparative Example 1 | 15 | 80 | 31 | 129 |

As confirmed by Table 1, the films of the examples exhibit a high contact angle to oleic acid as well as to water, and thus simultaneously have excellent water repellency and oil repellency. Specifically, it was confirmed that the anti-contamination films of the examples exhibited contact angles of 130° or more both to distilled water and to olefin acid, and thus have outstanding water repellency and oil repellency.

To the contrary, the film obtained in Comparative Example 1 exhibited relatively small contact angles to distilled water and oleic acid, compared to the films of Examples 1 and 2.

### <Examples 3 to 4: Preparation of film>

### Example 3

### (1) Formation of microprojection

On a silicon wafer, a SiO₂ layer was formed by PE-CVD (Plasmaenhanced chemical vapor deposition) to a thickness of 500 nm. A negative photoresist was coated on the SiO₂ layer, and using a photomask, UV was irradiated so as to form a pattern of a plate-shaped part of a diameter of 15 *µ*m. Further, using a photoresist stripper, parts other than the pattern of a plate-shaped part (functioning as an etching mask) were removed.

Thereafter, the SiO₂ layer was etched using BOE (buffered oxided etchant) to form a plate-shaped part of a microprojection [thickness: 0.3 *µ*m] that is also realized by the pattern of a plate-shaped part, and silicon was etched using a potassium hydroxide solution (etching the silicon wafer) to form a column part of a 3 *µ*m height pattern.

### (2) Formation of fluorine-based compound layer

Applying a pressure of 1 torr, 50 sccm of hexafluoropropylene oxide (HFPO), and a hot wire temperature of 650 °C, polytetrafluoroethylene (PTFE) was deposited on the surface of the above-prepared film including microprojections including a plate-shaped part and a column part by hot wire chemical vapor deposition (HW-CVD).

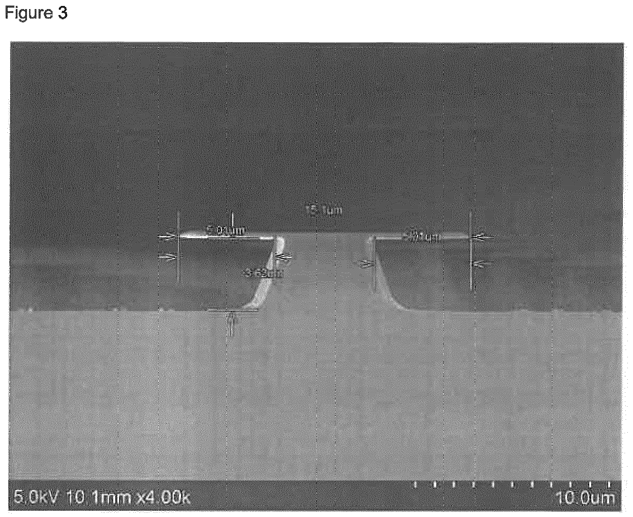

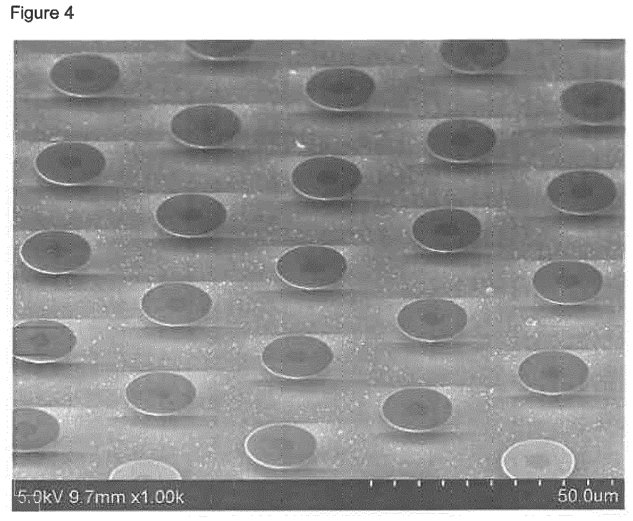

The cross-sectional SEM photograph and the planar SEM photograph of the microprojections of the film prepared above are respectively shown in Fig. 3 and Fig. 4. In the film obtained in Example 3, the ratio (H/S) of the height (H) of one of the microprojections to the distance (S) between the plate-shaped parts of two neighboring microprojections was 0.2.

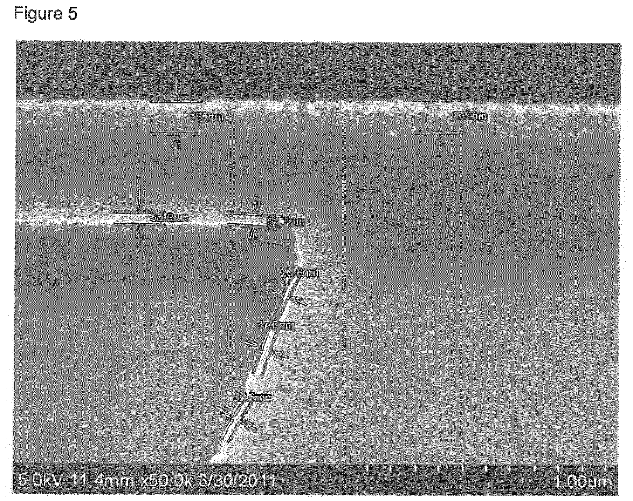

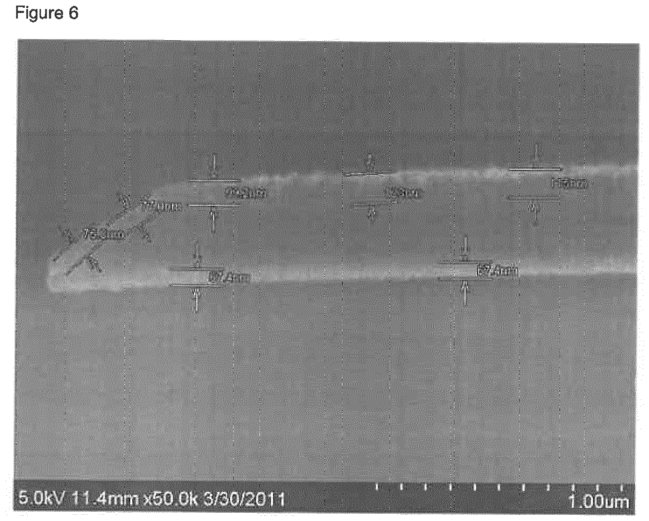

Further, the cross-sectional SEM photograph and more enlarged cross-sectional SEM photograph of the fluorine-based polymer layer formed on the surface of the microprojections of the film prepared in Example 3 are respectively shown in Fig. 5 and Fig. 6.

### Example 4

### (1) Formation of microprojection

On an organic substrate, Cr was deposited to a thickness of about 200 nm using a sputter. A negative photoresist was coated on the deposited Cr layer, and using a photomask, UV was irradiated so as to form a reversed image of a 6 *µ*m diameter circular pattern. Further, the uncured area was removed using a photoresist stripper [The photomask was prepared].

Thereafter, a negative photoresist was coated on the Cr layer on which the circular pattern was formed to a thickness of 7 *µ*m, and using index matching liquid and a diffuser, it was exposed to UV to form a photoresist (PR) including microprojections of the shape of a reversed circular truncated cone or reversed truncated polypyramid.

The photoresist (PR) including microprojections was surface-treated with fluorine, and then a mold was prepared using polydimethylsiloxane. Further, the mold was surface-treated with fluorine, and then polydimethylsiloxane was injected into the mold to prepare a film including microprojections.

### (2) Formation of fluorine-based compound layer

Optool DSX was diluted to the content of 0.8 wt% in a fluoroalcohol solution (3M, FC3283) at room temperature to prepare a coating solution.

Further, the above-prepared film including microprojections including a plate-shaped part and a column part was immersed in the coating solution for surface treatment.

The surface-treated film was treated in a thermo hygrostat at 60 °C and 90 RH% for 60 minutes to obtain a film, on the surface of which a fluorine-based compound layer was stacked.

### <Experimental Example 2: Measurement of anti-contamination film>

### 1. Measurement of static contact angle

By a tangent method, water and oleic acid were respectively put on the films obtained in the examples, and the static contact angles were measured using a DSA 100 measuring apparatus.

**[Table 2] Measurement results of static contact angle**

| | 3 ul of oleic acid | 3 ul of distilled water |
|---|---|---|
| Example 3 | 148° | 138° |
| Example 4 | 150° | 155° |

As confirmed in Table 2, the films of Examples 3 and 4, on which microprojections of a specific shape are formed in a specific structure and arrangement, exhibit a high contact angle to oleic acid as well as to water, and thus simultaneously have excellent water repellency and oil repellency. Specifically, it was confirmed that the films of Examples 3 and 4 exhibit a contact angle of 130° or more and thus have outstanding water repellency and oil repellency.

## Claims

1. A water repellent and oil repellent film comprising at least two microprojections having a shape comprised of a column part and a plate-shaped part located on the upper side of the column part which is the outermost side of the protruded direction of the column part,
wherein the plate-shaped part has a larger area than the upper side of the column part,
wherein the ratio of a height of one of the microprojections to a distance between the plate-shaped parts of two neighboring microprojections is 0.2 to 0.4.

2. The film according to claim 1,
wherein the plate-shaped part of the microprojection has an area of 1.2 to 10 times the upper side of the column part.

3. The film according to claim 1,
wherein the cross-section of the plate-shaped part in a direction parallel to a base side of the film forms a circle, an oval, or a polygon having 3 to 20 internal angles.

4. The film according to claim 1,
wherein the height of the microprojection is 0.02 *µ*m to 40 *µ*m.

5. The film according to claim 1,
wherein the microprojection includes at least one selected from the group consisting of glass, silicon, silicon doped with a metal, polysilicon, a silicon based polymer, a metal, a urethane resin, a polyimide resin, a polyester resin, a (meth)acrylate based polymer resin, a polyolefin resin, and a photosensitive polymer resin.

6. The film according to claim 1,
further comprising a fluorine-based compound layer stacked on the outside of the microprojection.

7. The film according to claim 6,
wherein the fluorine-based compound layer has a thickness of 5 nm to 5 *µ*m.

8. The film according to claim 7,
wherein the fluorine-based compound layer includes a fluorine-based unimolecular compound, a fluorine-based polymer compound, or a mixture thereof.

9. An electrical and electronic apparatus comprising the film of claim 1.

10. The electrical and electronic apparatus according to claim 9 wherein the film has a contact angle of 130° or more to 3 µl of oleic acid.

11. The electrical and electronic apparatus according to claim 9, wherein the film has a contact angle of 130 degrees or more to 3 µl of distilled water.

## Patentansprüche

1. Wasserabweisender und ölabweisender Film, umfassend mindestens zwei Mikrovorsprünge mit einer Form, die aus einem Säulenteil und einem plattenförmigen Teil besteht, der sich auf der Oberseite des Säulenteils befindet, die die äußerste Seite der vorstehenden Richtung des Säulenteils ist,
wobei der plattenförmige Teil eine größere Fläche als die Oberseite des Säulenteils aufweist,
wobei das Verhältnis einer Höhe eines der Mikrovorsprünge zu einem Abstand zwischen den plattenförmigen Teilen zweier benachbarter Mikrovorsprünge 0,2 bis 0,4 beträgt.

2. Film nach Anspruch 1,
wobei der plattenförmige Teil des Mikrovorsprungs eine Fläche von 1,2 bis 10 Mal die Oberseite des Säulenteils aufweist.

3. Film nach Anspruch 1,
wobei der Querschnitt des plattenförmigen Teils in einer Richtung parallel zu einer Basisseite des Films einen Kreis, ein Oval oder ein Polygon mit 3 bis 20 Innenwinkeln bildet.

4. Film nach Anspruch 1,
wobei die Höhe des Mikrovorsprungs 0,02 µm bis 40 µm beträgt.

5. Film nach Anspruch 1,
wobei der Mikrovorsprung mindestens eines ausgewählt aus der Gruppe bestehend aus Glas, Silizium, mit einem Metall dotiertem Silizium, Polysilizium, einem auf Silizium basierenden Polymer, einem Metall, einem Urethanharz, einem Polyimidharz, einem Polyesterharz, einem auf (Meth)acrylat basierenden Polymerharz, einem Polyolefinharz und einem lichtempfindlichen Polymerharz umfasst.

6. Film nach Anspruch 1,
ferner umfassend eine auf Fluor basierende Verbindungsschicht, die auf der Außenseite des Mikrovorsprungs gestapelt ist.

7. Film nach Anspruch 6,
wobei die auf Fluor basierende Verbindungsschicht eine Dicke von 5 nm bis 5 um aufweist.

8. Film nach Anspruch 7,
wobei die auf Fluor basierende Verbindungsschicht eine unimolekulare Verbindung auf Fluorbasis, eine Polymerverbindung auf Fluorbasis oder eine Mischung davon umfasst.

9. Elektrische und elektronische Vorrichtung, umfassend den Film nach Anspruch 1.

10. Elektrische und elektronische Vorrichtung nach Anspruch 9,
wobei der Film einen Kontaktwinkel von 130° oder mehr hinsichtlich 3 µl Ölsäure aufweist.

11. Elektrische und elektronische Vorrichtung nach Anspruch 9,
wobei der Film einen Kontaktwinkel von 130 Grad oder mehr hinsichtlich 3 µl destilliertem Wasser aufweist.

## Revendications

1. Film hydrofuge et oléofuge comprenant au moins deux microprojections qui ont une forme comprenant une partie colonnaire et une partie en forme de plaque située sur la portion supérieure de la partie colonnaire qui est la portion la plus externe de la direction saillante de la partie colonnaire,
où la partie en forme de plaque a une aire plus importante que la portion supérieure de la partie colonnaire,
où le rapport entre une hauteur de l'une des microprojections et une distance entre la partie en forme de plaque de deux microprojections adjacentes va de 0,2 à 0,4.

2. Film selon la revendication 1,
où la partie en forme de plaque de la microprojection a une aire 1,2 à 10 fois plus importante que la portion supérieure de la partie colonnaire.

3. Film selon la revendication 1,
où la section transversale de la partie en forme de plaque dans une direction parallèle à une portion de base du film forme un cercle, un ovale ou un polygone qui a 3 à 20 angles internes.

4. Film selon la revendication 1,
où la hauteur de la microprojection va de 0,02 µm à 40 µm.

5. Film selon la revendication 1,
où la microprojection inclut un au moins sélectionné dans le groupe consistant en les suivants : verre, silicium, silicium dopé par un métal, polysilicium, polymère à base de silicium, métal, résine uréthane, résine polyimide, résine polyester, résine polymère à base d'un (méth)acrylate, résine polyoléfine et résine polymère photosensible.

6. Film selon la revendication 1,
comprenant en outre une couche d'un composé à base de fluor empilée sur l'extérieur de la microprojection.

7. Film selon la revendication 6,
où la couche du composé à base de fluor a une épaisseur qui va de 5 nm à 5 µm.

8. Film selon la revendication 7,
où la couche du composé à base de fluor inclut un composé unimoléculaire à base de fluor, un composé polymère à base de fluor ou un mélange de ceux-ci.

9. Appareil électrique et électronique comprenant le film de la revendication 1.

10. Appareil électrique et électronique selon la revendication 9,
où le film a un angle de contact avec 3 µl d'acide oléique égal ou supérieur à 130°.

11. Appareil électrique et électronique selon la revendication 9,
où le film a un angle de contact avec 3 µl d'eau distillée égal ou supérieur à 130 degrés.
